# EUROPEAN PATENT SPECIFICATION

(11) **EP 1 056 373 B1**
(45) Date of publication and mention of the grant of the patent: **06.08.2003**
(21) Application number: 99906665.7
(22) Date of filing: 15.02.1999
(51) Int. Cl.: A47F 1/12, B65G 1/06

(54) **A SHELF DEVICE WITH FEEDING ARRANGEMENT**
REGALANORDNUNG MIT EINER AUSGABEVORRICHTUNG
DISPOSITIF DE RAYONNAGE MUNI D'UN MECANISME DE DISTRIBUTION

(30) Priority: 16.02.1998 SE 9800438
(43) Date of publication of application: 06.12.2000
(73) Proprietor: Frontmatic Nordic AB, 126 30 Hägersten (SE)
(72) Inventor: Brodin, Sebastian, 117 62 Stockholm (SE)
(74) Representative: Berglund, Stefan
(86) International application number: SE9900193
(87) International publication number: WO99040822

(56) References cited:
- EP-A1- 0 603 140
- EP-A2- 0 481 969
- WO-A1-96/29919
- US-A- 4 809 836
- US-A- 4 891 755

## Description

### TECHNICAL FIELD OF THE INVENTION AND PRIOR ART

The present invention relates to a shelf device arranged to receive a plurality of objects in such a way that these are provided essentially one after the other in a row with a first of these objects in a front position of the shelf device, from which position said first object is arranged to be removable by a person from the shelf device, wherein the shelf device comprises a detecting device arranged to detect when an object is removed from said front position and a control member arranged to initiate feeding of a new object to the front position.

Such a shelf device is previously known by WO96/29919. This shelf device comprises two optical sensors, which are arranged to detect if an object is located in the front position of the shelf device. When these sensors do not detect any object in the front position, a motor is activated for feeding a new object by means of a belt.

By, for example, US 4 239 099, US 4 351 439 and US 4 729 481 other types of shelf devices are previously known, wherein articles provided in a row are fed forwardly when the first article in the row is removed from the shelf device. In these cases, the feeding is provided by a force applied in the feeding direction, which in the examples referred to is an attraction of gravity or a prestressed spring force, in such a way that, when the first article in the row is removed, the article behind is automatically fed forwardly.

EP 0 481 969 discloses a shop rack comprising a plurality of shelves on which articles can be displayed. The shop rack comprises conveyer means capable of periodically transporting articles to the front of the shelves and drive means for the conveyer means, said drive means being arranged to service simultaneously at least some superimposed shelves. The rack may further comprise detecting means detecting whether there are any products on the front part of a shelf.

Consequently, in shops and storerooms having the above described shelf device no staff is required for moving the objects, provided on the shelves, forwardly with regular intervals so that the objects are easily accessible to, for example, customers in a shop. Thereby, such shelf devices may be provided with shelves provided closer together and on a higher level than ordinary shelves, because an article is constantly located in a front position of the shelf.

A disadvantage with the known shelf devices involving automatic feeding of the articles immediately after a or the last front-most article has been removed, is that there is or may not be any place to replace the article if one changes ones mind. For a customer, certain sale objects often may be of interest to hold in the hand in order to read the information on the package before the customer makes up his mind. Therefore, a risk by these shelf devices is that articles and sale objects are placed by the customers at wrong positions, wherein staff resources are needed to walk around and take care of articles removed from the shelves, which could not be replaced.

### SUMMARY OF THE INVENTION

The object of the present invention is to provide a shelf device, for example, in shops and storerooms, which has an automatic feeding of the objects on the shelves as they are removed, and which facilitates to the customers to reach the objects which are placed on the shelves. At the same time, it is an object to save staff resources which are needed to feed manually these objects forwardly. These shelf devices are designed in such a manner that the objects, provided on the shelf device automatically but with a predetermined time-delay are fed forwardly to a front position of the shelf device such that a front-most object, removed from the shelf device by the customer, may be replaced on the shelf device if, within said time-delay, he changes his mind.

This object is achieved by the shelf device according to claim 1. Thereby, it is possible, for example, for a customer to replace an object removed from the shelf device within a determined time period.

According to the invention, a detecting device is arranged to detect when an object is removed from said front position and a control member is arranged to initiate feeding of a new object. Such a detecting member may comprise a capacitive detector or a switch member. The control member may comprise an electric unit, which has an automatic time delay. The time delay may be in the order of 5-120 seconds, preferably 15-60 seconds. This time delay ought to be at least so long that a customer without stress may remove an object from the shelf device and thereafter replace it before a new object is fed to the front position of the shelf device. However, the time delay ought not to be too long, so that a customer has to wait before he can take an article at the front position from the shelf device. Since the consumption of different types of sale objects varies and since the behaviour of the customers varies with respect to different articles, said time delay of the shelf device may be adjustable by means of an adjusting member.

According to a preferred embodiment of the invention, the shelf device comprises at least a belt arranged to support said objects and provide the feeding of the objects. Thereby, said belt may be endless and guided by at least two roller members. Thereby, the upper side of such a belt is arranged to support said objects and provide the feeding of the objects. For the driving of the belt, at least one of said roller members may be connected to a motor. Such a motor may be, for example, an electric motor. In this case, the control member is arranged to start said motor with said time delay after an object has been removed from the front position.

According to another preferred embodiment of the invention, the shelf device comprises a device for stretching the belt. Thereby, the belt may be stretched to a suitable extent to feed and support said objects. The stretching device may be designed in such a manner that the belt may be released from the roller member for, for example, cleaning, service or exchange of the belt. Such a stretching device may comprise a mechanism arranged to displace adjustably at least one of the roller members in the longitudinal direction of the belt. In this connection, a mechanism may be provided to displace a shaft, provided to extend through the roller members, in the longitudinal direction of the belt.

According to another embodiment of the invention, said means may be arranged to output an indicating signal, which indicates that objects are missing on the shelf, when a new object is not detected in the front position in spite of repeated feedings. By such a construction, a quick indication is obtained that one kind of object is missing on the shelf device, wherein new objects may be filled up.

### BRIEF DESCRIPTION OF THE DRAWINGS

In the following, preferred embodiments of the invention are described by way of example with reference to the attached drawings, in which:
- Fig 1: shows from the above a shelf device according to a first embodiment of the invention,
- Fig 2: shows the shelf device in Fig 1, seen from the side,
- Fig 3: shows from the above a shelf device according to a second embodiment of the invention,
- Fig 4: shows the shelf device in Fig 3, seen from the side,
- Fig 5: shows a belt-stretching device of the shelf device.

### DETAILED DESCRIPTION OF PREFERRED EMBODIMENTS OF THE INVENTION

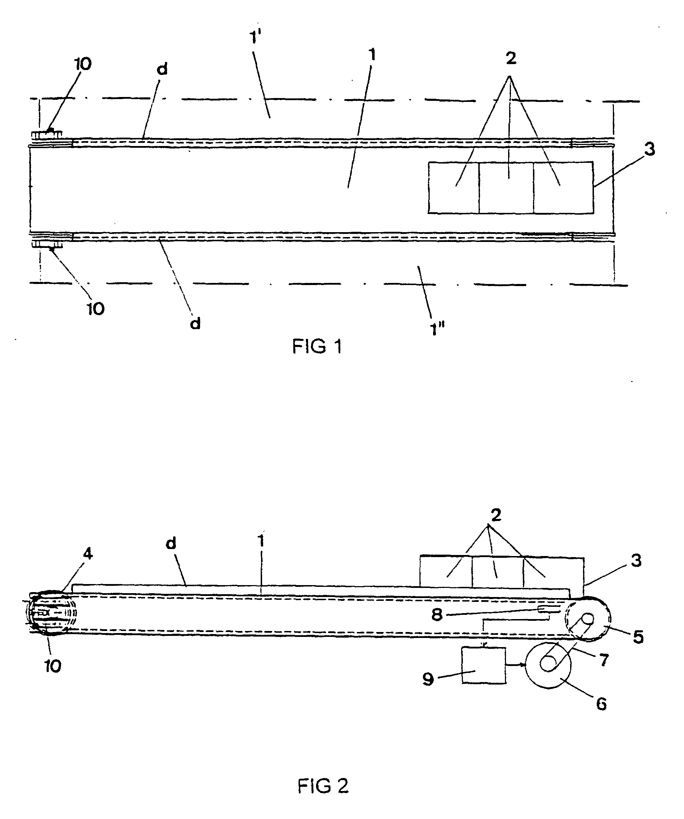

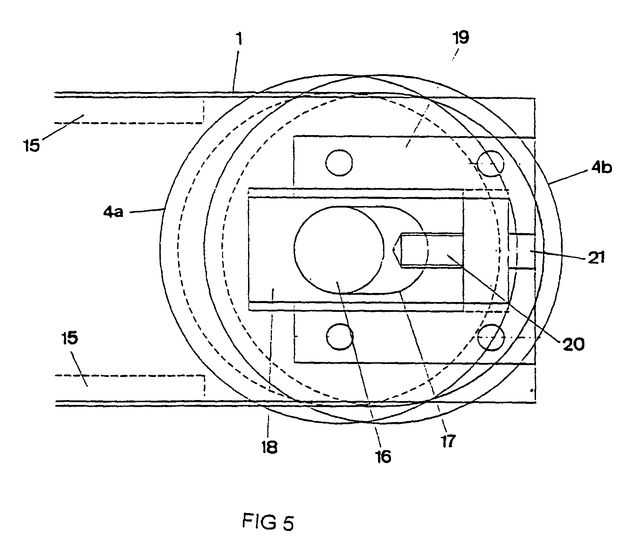

In Fig. 1, a shelf device according to a first embodiment of the invention is shown, wherein a belt 1 is provided for the feeding of objects 2, which essentially are provided one after the other in a row with a first of said objects 2 in a front position 3 of the shelf device. In this front position 3, the objects 2 are easy to remove from the shelf device. As better seen in Fig 2, the belt comprises an endless loop which is guided by two roller members 4, 5. A motor 6, which preferably is an electrical motor, is arranged to drive the roller member 5 and thereby the belt 1 via a driving mechanism, comprising, for example, a gear mechanism, a belt 7, a chain, or the like. Dividing members d are provided on each side of the belt 1 and are arranged to prevent the objects 2 on the belt 1 from being displaced to an adjacent belt 1' or 1". The dividing members d may be removable, in order to utilise, for example, more than one belt 1 for large objects 2, which have a width extending the width of more than one belt 1. A detecting member in form of a proximity sensor, such as a capacitive detector 8, is provided below the belt 1 at said front position 3 of the shelf device in order to detect if an object 2 is located at said front position 3. When an object 2 is missing at said front position 3, the capacitive detector 8 is arranged to output a signal, which is conducted to a control member 9. Thereby, the control member 9 is arranged, with a time delay after the signal from the detector is received, to start the motor 6 for the driving of the roller member 5 and thereby the belt 1, in order to feed a new object 2 forwardly to said position 3. Thereafter, the capacitive detector 8 detects when a new object 2 is positioned at said front position 3. When a new object 2 is detected, the output signal from the detector 8 to the control member 9 is ended. Thereby, the control member 9 turns the motor 6 off in such a manner that the belt 1 is stopped, wherein the new object 2 is at said front position 3. In order to supply a correct stretching to the belt, a belt stretching device 10 is provided adjacent the roller member 4. A more detailed design of the belt stretching device 10 is described in Fig 5. By means of the belt stretching device 10, the belt 1 may, by minimum stretching, be moved laterally over the roller members 4, 5 for cleaning, service or exchange of the belt.

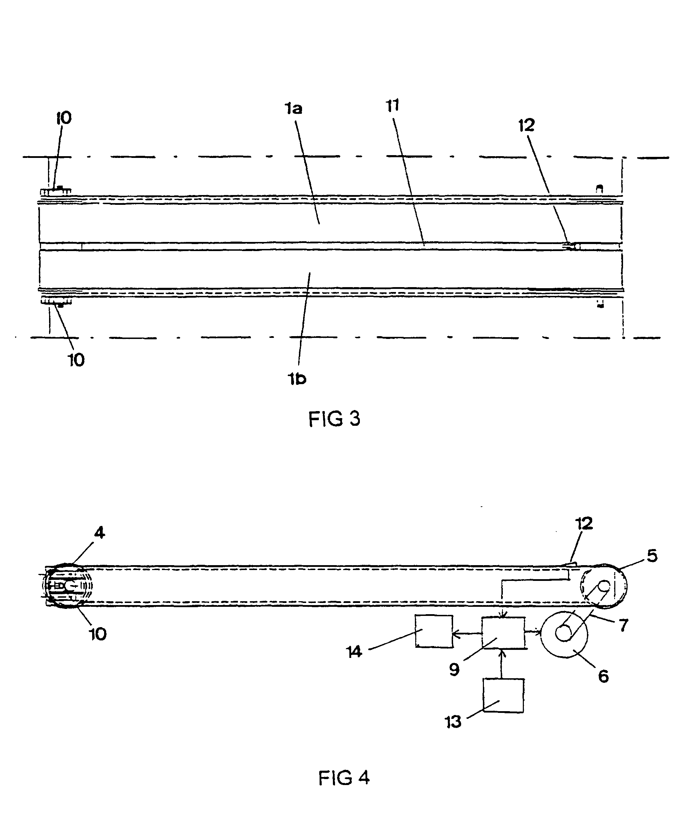

Fig 3 and 4 show a second embodiment of the shelf device. This embodiment differs from the one mentioned above in that the device comprises two belts 1a, 1b provided in parallel. The belts 1a, 1b are provided at a distance 11 from each other, thereby forming a space, wherein a detecting member in form of a switch member 12, for example in form of a microswitch, is provided at the front position 3 of the shelf device in the space between the belts 1a, 1b. Consequently, an object 2 positioned at said front position 3 of the shelf device may actuate the switch member 12, which may be designed not to output a signal to the control unit 9 in a depressed lower position. Consequently, in this position the bands 1a, 1b may not be activated by the electric motor 6, via the roller member 5. If the object 2, on the other hand, is removed from said front position 3 of the shelf device, the switch member 12 is moved upwardly by means of a spring to an upper position, wherein a signal is output to the control member 9, which activates, after a determined time delay, the electric motor 6 for the driving of the belts 1a, 1b, in order to feed a new object 2 to said front position 3. In this embodiment, an adjusting member 13 is provided, so that the time delay in the control member 9 may be adjusted variably. If the signal from the switch member 12 is not ended in spite of repeated feedings of the belts 1a, 1b, the control member 9 is arranged to output an indicating signal to an indicating member 14. The indicating member 14 may provide a light or sound signal, which indicates that an object is missing on said shelf device, either at a place adjacent to the object or, for example, in a central unit. In this way, it may be observed quickly that one kind of object is missing on a shelf device. Thereby, new objects may quickly be filled on.

In Fig 5, the roller member 4 is shown at a front position 4a, wherein the stretching of the belt is minimal and at a rear position 4b, wherein the belt stretching is maximal. Upper and lower support plates 15 are also indicated in Fig 5 and arranged to support the belt 1 in such a way that the belt 1 is not bent by the weight of the supported objects 2. On each side, the roller member 4 comprises an output shaft 16, provided in a passage 17 extending through a slide 18. The slide 18 is displaceable in an attachment 19. The slide 18 comprises a threaded hole 20 coaxially provided in relation to a hole 21 provided in the attachment 19. By introducing a screw or bolt having a threaded lower portion, the position of the slide 18 may be adjusted in relation to the attachment 19 in a continuous way, wherein the position of the shaft 16 and thereby also the position of the roller member 4 may be adjusted in the longitudinal direction of the belt with a following stretching and unstretching, respectively, of the belt 1.

The invention is not in any way restricted to the embodiments described in the drawings but may be freely varied within the scope of the claims. For example, other feeding devices than belts guided by roller members may be used. Furthermore, the positioning of the motor 6 and the belt-stretching device 10 may be varied in a suitable way in relation to the front position 3. The motor position disclosed in the embodiments is not limiting to the invention. Other kinds of detecting members than the above described may also be used, for example inductive detectors, photo sensible elements, etc.

## Claims

1. A shelf device arranged to receive a plurality of objects (2) in such a way that these are provided essentially one after the other in a row with a first of these objects (2) in a front position (3) of the shelf device, from which position said first object is arranged to be removable by a person from the shelf device, wherein the shelf device comprises a detecting device arranged to detect when an object is removed from said front position (3) and a control member (9) arranged to initiate feeding of a new object to the front position, **characterised in that** said control member (9) is arranged to initiate said feeding with a determined time delay after an object (2) has been removed from said front position (3) such that, within said time delay, the person may replace a removed object to the front position (3) on the shelf device before a new object is fed to said front position (3).

2. A shelf device according to claim 1, **characterised in that** said detecting device comprises a capacitive detector (8).

3. A shelf device according to claim 1, **characterised in that** said detecting device comprises a switch member (12).

4. A shelf device according to any one of the preceding claims, **characterised in that** said time delay is in the order of 5-120 seconds, preferable 15-60 seconds.

5. A shelf device according to any one of the preceding claims, **characterised in that** said time delay is adjustable by means of an adjusting member (13).

6. A shelf device according to any one of the preceding claims, **characterised in that** the shelf device comprises at least a belt (1) arranged to support said objects (2) and provide the feeding of the objects (2).

7. A shelf device according to claim 6, **characterised in that** said belt (1) is endless and guided by at least two roller members (4, 5).

8. A shelf device according to claim 7, **characterised in that** at least one of said roller members (4, 5) is connected to a motor for the driving of the belt (1).

9. A shelf device according to claim 8, **characterised in that** said control member (9) is arranged to start said motor (6) with said time delay after an object (2) has been removed from the front position (3).

10. A shelf device according to any one of the claims 6-9, **characterised in that** the shelf device comprises a device (10) for stretching the belt.

11. A shelf device according to claim 10, **characterised in that** said stretching device (10) comprises a mechanism arranged to displace adjustably at least one of the roller members (4, 5) in the longitudinal direction of the belt (1).

12. A shelf device according to any one of the preceding claims, **characterised in that** said means is arranged to output an indicating signal, which indicate that objects are missing on the shelf, when a new object is not detected in the front position (3) in spite of repeated feedings.

## Patentansprüche

1. Abstellvorrichtung, vorgesehen, um eine Vielzahl von Objekten (2) auf eine derartige Weise aufzunehmen, dass diese im Wesentlichen eines nach dem anderen in einer Reihe mit einem ersten dieser Objekte (2) in einer vorderen Position (3) der Abstellvorrichtung bereitgestellt sind, in welcher Position das erste Objekt angeordnet ist, um von der Abstellvorrichtung durch eine Person entnehmbar zu sein, wobei die Abstellvorrichtung ein Erkennungsgerät, welches vorgesehen ist, um zu erkennen, wenn ein Objekt von der vorderen Position (3) entfernt wird, und ein Steuerelement (9), welches vorgesehen ist, um ein Vorschieben eines neuen Objekts zur vorderen Position einzuleiten, umfasst, **dadurch gekennzeichnet, dass** das Steuerelement (9) vorgesehen ist, um das Vorschieben mit einer bestimmten Zeitverzögerung einzuleiten, nachdem ein Objekt (2) von der vorderen Position (3) entfernt wurde, so dass die Person innerhalb der Zeitverzögerung ein entferntes Objekt auf die vordere Position (3) der Abstellvorrichtung zurückstellen kann, bevor ein neues Objekt zu der vorderen Position (3) vorgeschoben wird.

2. Abstellvorrichtung nach Anspruch 1, **dadurch gekennzeichnet, dass** das Erkennungsgerät einen kapazitiven Detektor (8) umfasst.

3. Abstellvorrichtung nach Anspruch 1, **dadurch gekennzeichnet, dass** das Erkennungsgerät ein Schalterelement (12) umfasst.

4. Abstellvorrichtung nach einem der vorhergehenden Ansprüche, **dadurch gekennzeichnet, dass** die Zeitverzögerung im Bereich von 5 bis 120 Sekunden und vorzugsweise 5 bis 60 Sekunden liegt.

5. Abstellvorrichtung nach einem der vorhergehenden Ansprüche, **dadurch gekennzeichnet, dass** die Zeitverzögerung mittels eines Einstellelements (13) einstellbar ist.

6. Abstellvorrichtung nach einem der vorhergehenden Ansprüche, **dadurch gekennzeichnet, dass** die Abstellvorrichtung wenigstens ein Förderband (1) umfasst, welches vorgesehen ist, um die Objekte (2) zu tragen und das Vorschieben der Objekte (2) zu ermöglichen.

7. Abstellvorrichtung nach Anspruch 6, **dadurch gekennzeichnet, dass** das Förderband (1) endlos ist und durch wenigstens zwei Walzenelemente (4, 5) geführt wird.

8. Abstellvorrichtung nach Anspruch 7, **dadurch gekennzeichnet, dass** wenigstens eines der Walzenelemente (4, 5) zum Antreiben des Förderbands (1) an einen Motor angeschlossen ist.

9. Abstellvorrichtung nach Anspruch 8, **dadurch gekennzeichnet, dass** das Steuerelement (9) vorgesehen ist, um den Motor (6) mit der Zeitverzögerung zu starten, nachdem ein Objekt (2) von der vorderen Position (3) entfernt wurde.

10. Abstellvorrichtung nach einem der Ansprüche 6 bis 9, **dadurch gekennzeichnet, dass** die Abstellvorrichtung eine Vorrichtung (10) zum Spannen des Förderbands umfasst.

11. Abstellvorrichtung nach Anspruch 10, **dadurch gekennzeichnet, dass** die Spannvorrichtung (10) einen Mechanismus umfasst, welcher vorgesehen ist, um wenigstens eines der Walzenelemente (4, 5) in der Längsrichtung des Förderbands (1) einstellbar zu versetzen.

12. Abstellvorrichtung nach einem der vorhergehenden Ansprüche, **dadurch gekennzeichnet, dass** das Mittel angeordnet ist, um an Stelle wiederholten Vorschiebens ein Anzeigesignal auszugeben, welches anzeigt, dass Objekte auf der Abstellvorrichtung fehlen, wenn ein neues Objekt in der vorderen Position (3) nicht erkannt wird.

## Revendications

1. Dispositif à étagère prévu pour recevoir plusieurs objets (2) de telle manière que ces objets sont présentés essentiellement l'un après l'autre dans une rangée avec un premier objet (2) dans une position frontale (3) du dispositif à étagère, à partir duquel la position dudit premier objet est prévue pour être retirée du dispositif à étagère, par une personne, dans lequel le dispositif à étagère comprend un dispositif de détection prévu pour détecter lorsqu'un objet est retiré à partir de ladite position frontale (3) et un membre de contrôle (9) prévu pour mettre en oeuvre l'alimentation d'un nouvel objet dans la position frontale, **caractérisé en ce que** ledit membre de contrôle (9) est prévu pour mettre en oeuvre ladite alimentation avec une temporisation déterminée après qu'un objet (2) soit retiré de ladite position frontale (3) telle que, à l'intérieur de ladite temporisation la personne peut remplacer un objet retiré dans la position frontale (3) sur le dispositif à étagère avant qu'un nouvel objet ne soit alimenté dans ladite position frontale (3).

2. Dispositif à étagère selon la revendication 1, **caractérisé en ce que** ledit dispositif de détection comprend un détecteur capacitif (8).

3. Dispositif à étagère selon la revendication 1, **caractérisé en ce que** ledit dispositif de détection comprend un membre à interrupteur (12).

4. Dispositif à étagère selon l'une quelconque des revendications précédentes, **caractérisé en ce que** ladite temporisation est de l'ordre de 5-120 secondes, de préférence 15-60 secondes.

5. Dispositif à étagère selon l'une quelconque des revendications précédentes, **caractérisé en ce que** ledit délai temporel est réglable au moyen d'un membre de réglage (13).

6. Dispositif à étagère selon l'une quelconque des revendications précédentes, **caractérisé en ce que** ledit dispositif à étagère comprend au moins une courroie (1) prévue pour supporter lesdits objets (2) et fournir l'alimentation des objets (2).

7. Dispositif à étagère selon la revendication 6, **caractérisé en ce que** ladite courroie (1) est sans fin et est guidée par au moins deux membres à rouleau (4, 5).

8. Dispositif à étagère selon la revendication 7, **caractérisé en ce qu'**au moins l'un desdits membres à rouleau (4, 5) est relié à un moteur pour l'entraînement de la courroie (1).

9. Dispositif à étagère selon la revendication 8, **caractérisé en ce que** ledit membre de contrôle (9) est prévu pour faire démarrer ledit moteur (6) avec ledit délai temporel, après qu'un objet (2) soit retiré de sa position frontale (3).

10. Dispositif à étagère selon l'une quelconque des revendications 6 à 9, **caractérisé en ce que** le dispositif à étagère comprend un dispositif (10) pour tendre la courroie.

11. Dispositif à étagère selon la revendication 10, **caractérisé en ce que** ledit dispositif pour tendre la courroie (10) comprend un mécanisme prévu pour déplacer de manière réglable au moins un des membres à rouleau (4, 5) dans la direction longitudinale de la courroie (1).

12. Dispositif à étagère selon l'une quelconque des revendications précédentes, **caractérisé en ce que** lesdits moyens sont prévus pour produire un signal de sortie indiquant que des objets sont manquants sur l'étagère, lorsqu'un nouvel objet n'est pas détecté dans la position frontale (3) malgré des alimentations répétées.
